# EUROPÄISCHE PATENTSCHRIFT

(11) **EP 3 279 118 B1**
(45) Veröffentlichungstag und Bekanntmachung des Hinweises auf die Patenterteilung: **07.06.2023**
(21) Anmeldenummer: 17183627.3
(22) Anmeldetag: 27.07.2017
(51) Int. Cl.: B65G 21/10, B65G 15/14

(54) **FÖRDERSYSTEM**
CONVEYOR SYSTEM
SYSTÈME DE TRANSPORT

(30) Priorität: 05.08.2016 DE 102016114604
(43) Veröffentlichungstag der Anmeldung: 07.02.2018
(60) Teilanmeldung: 22216781.9
(73) Patentinhaber: WIPOTEC GmbH, 67657 Kaiserslautern (DE)
(72) Erfinder: Günther, Oliver, 67734 Katzweiler (DE); Schmidt, Kay-Eric, 67678 Mehlingen (DE)
(74) Vertreter: Eder Schieschke & Partner mbB

(56) Entgegenhaltungen:
- CN-A- 103 979 252
- CN-B- 103 787 025
- CN-U- 201 817 034
- CN-U- 202 828 707
- DE-A1-102010 050 524
- JP-B2- 3 001 137
- US-A1- 2011 076 128
- US-A1- 2013 192 764
- US-B1- 7 909 159

## Beschreibung

Die vorliegende Erfindung betrifft ein Fördersystem zum Transport von diskreten Gütern.

Solche Fördersysteme werden im Stand im Technik eingesetzt zur Kennzeichnung und Überwachung sowie Nachverfolgung von Gütern, wie beispielsweise Verpackungen mit pharmazeutischen Erzeugnissen, verpackten Lebensmitteln oder sonstigen Produkten, die eine oder mehrere Kennzeichnungen tragen bzw. erhalten sollen und/oder deren Kennzeichnung zu Kontrollzwecken erfasst werden soll. Solche Kennzeichnungs- und Inspektionsgeräte werden vorzugsweise eng beieinander angeordnet, um wenig Platz in bestehenden Produktionsanlagen zu belegen. Eine bevorzugte Anwendung auch der vorliegenden Erfindung liegt dabei im Bereich der Serialisierung und Aggregation von einzelnen Packungen zu Bündeln oder Gebinden, wozu die einzelnen Packungen (oder auch daraus gebildete Gebinde) hinsichtlich Ihrer Kennzeichnungen oder anderer Eigenschaften zu überprüfen bzw. zu bearbeiten sind.

Um in einer modernen vollautomatisierten Produktions- bzw. Inspektionsanlage Güter mit unterschiedlichsten Eigenschaften (Form/Geometrie, Material, Farbe, Gewicht etc.) handhaben zu können, müssen diese Anlagen eine hohe Flexibilität aufweisen. Da die Güter (im Folgenden auch als "Produkte" bezeichnet) bevorzugt mit hohen Durchlaufgeschwindigkeiten (beispielsweise 1 bis 4m/s) durch die Anlagen bewegt werden müssen, muss auch die Anpassung und Umrüstung auf verschiedene Gütereigenschaften schnell und fehlerfrei erfolgen können.

Bekannt ist zu diesem Zweck eine Transporteinheit mit einem unteren und einem oberen Transportband, zwischen denen das zu verarbeitende Gut transportiert wird, indem es nur auf dem unteren Transportband aufliegt oder gleichzeitig durch das obere Transportband geklemmt wird. Im geklemmten Zustand lassen sich die Güter zeit- und ortsgenau bewegen, so dass beispielsweise eine als Aufdruck vorgesehene Kennzeichnung auch bei hohen Transportgeschwindigkeiten sehr genau, oft mit Toleranzen von wenigen Hundertstelmillimetern am vorgegebenen Aufbringungsort auf der Packung/dem Gut platziert werden kann. Diese hochgenaue Bewegung bzw. Positionierung der transportierten Güter ist von entscheidender Bedeutung für die Qualität beim Aufbringen von Kennzeichnungen (Aufdruck von Barcodes o.ä.) oder bei deren Erfassung (per Scanner oder Kamera), etwa zum Zweck der Qualitätssicherung.

Bekannt ist dabei, das obere wie auch das untere Transportband jeweils aus zwei nebeneinander seitlich beabstandet angeordneten Bandkörpern auszubilden. Dies erlaubt die Platzierung von oder das Einwirken durch Bearbeitungstools, wie zum Beispiel Druckköpfe, Kameras, Scanner, Lichtschranken etc. auch zwischen den seitlich beabstandeten Bandkörpern, um beispielsweise den Bodenbereich einer Packung gut erreichen zu können. Auch verhindern die seitlich beabstandeten Bänder eine Verdrehung der Güter während des Transports. Ein weiterer Vorteil liegt darin, dass die Packungen deutlich beabstandet zu ihren Seitenkanten auf den unteren Bandkörpern aufliegen können, so dass Sicherungsetiketten bzw. Siegel problemlos an der Seite der Packung appliziert und zur Ober- oder Unterseite hin umgelegt werden können, während die Packung sicher zwischen den Bandkörpern gehalten wird. Vorzugsweise erfolgt die Bearbeitung dynamisch, also während die Güter bewegt werden. Theoretisch ist auch eine rein statische Bearbeitung denkbar, zu der die Güter kurzfristig angehalten werden können. Während die unteren Bandkörper in ihrer Höhe weitgehend unverändert vormontiert sind, sind die oberen Bandkörper über einen Hubmechanismus in der Höhe variabel verstellbar, um Packungen unterschiedlicher Höhen zwischen den oberen und unteren Bandkörpern geklemmt transportieren zu können.

Dabei wird jedoch die Zugänglichkeit der transportierten Güter eingeschränkt durch Rahmen oder Versteifungselemente, welche der Aufhängung der Bandkörper dienen bzw. diese stabilisieren sollen. Der allseitige Zugang zu den zwischen den Bandkörpern geführten Gütern wird dadurch behindert und die flexible Einsetzbarkeit des Fördersystems entsprechend einschränkt.

Aus der CN 202 828 707 U ist ein Bandförderer eines Sortiersystems bekannt, welcher Zigarettenpackungen zwischen zwei übereinanderliegenden Bandkörper geklemmt transportieren kann. Die Höhenposition des oberen Bandkörpers ist über vier Gewindehülsen und mit diesen jeweils verschraubten Gewindestangen einstellbar, wobei jede Hülse innenseitig ein Rechts- und ein Linksgewinde aufweist, in welches die Gewindestangen mit jeweils passendem Gewinde eingreifen.

Die CN 201 817 034 U offenbart ein Fördersystem zur Förderung von diskreten Gütern, umfassend wenigstens einen oberen Bandkörper und einen unteren Bandkörper um die Güter zwischen den oberen und unteren Bandkörpern geklemmt transportieren zu können, mit einem sich in einer Förderrichtung und in einer horizontal quer dazu verlaufenden Breitenrichtung erstreckenden Basisrahmen, wobei der Basisrahmen den wenigstens einen unteren Bandkörper mittelbar oder unmittelbar stützt, der in einer zur Förder- und Breitenrichtung senkrecht verlaufenden Höhenrichtung angeordnet ist, wobei an wenigstens drei Ecken eines in X-Y-Richtung verlaufenden, gedachten Vierecks, insbesondere Rechtecks, je eine in Z-Richtung verlaufende Hubsäule an dem Basisrahmen angeordnet ist, welche über jeweils an der Hubsäule höhenverschieblich gelagerte Spindelmuttern, die Teil eines Hubmechanismus sind, den wenigsten einen oberen Bandkörper tragen, und wobei wenigstens eine Hubsäule nicht durch einen oberhalb ihrer Spindelmutter über einen in X-Richtung verlaufenden ortsfesten Längsverbinder mit einer anderen Hubsäule verbunden ist.

Aufgabe der Erfindung war es, ein Fördersystem der vorgenannten Art zu schaffen, welches den allseitigen Zugang zu den geförderten Gütern bzw. ihrer Packungsoberfläche ermöglicht.

Die Aufgabe wird gelöst durch eine Vorrichtung nach Anspruch 1. Weitere vorteilhafte Ausführungsformen ergeben sich aus den Unteransprüchen.

Die Erfindung beruht auf der Erkenntnis, mittels Hubsäulen höhenverstellbare Bandkörper schaffen zu können, ohne dass besondere Rahmen oder Versteifungselemente den Zugang zu den Bandkörpern bzw. den von ihnen geförderten Gütern behindern. Die Höhenverstellung erfolgt mittels vierer an den Ecken eines Vierecks, insbesondere des Grundrahmens positionierter Spindeln, die jeweils mindestens eine Spindelmutter tragen. Quer zur Förderrichtung verlaufen von den Spindelmuttern gehaltene Querträger, an welchen die oberen Bandkörper befestigt sind. Durch Rotation der Spindeln lässt sich die Höhe der Querträger und damit der oberen Bandkörper variabel einstellen. Ein besonders guter Zugang zu den geförderten Gütern wird dadurch erreicht, dass zumindest teilweise darauf verzichtet wird, die Hubsäulen oberhalb der oberen Bandkörper durch Längs- oder Querverbinder gegeneinander abzustützen und zu stabilisieren. Dadurch kann insbesondere ein alle Hubsäulen bzw. Spindeln in Förderrichtung stützender Längsträger entfallen, so dass der dadurch freigegebene Raum zur Positionierung bzw. zur Anwendung von Bearbeitungstools genutzt werden kann. Gegenüber dem Stand der Technik kann das Fördersystem daher noch kompakter und damit platzsparender aufgebaut werden.

Unter "Spindelmutter" und "Spindel" soll im weitesten Sinne jedes formschlüssige Kraftübertragungssystem verstanden werden, bei dem aus einer Rotationsbewegung eine Linearbewegung erzeugt wird. Bevorzugt kann die Spindel dabei auch als Zahnstange ausgeführt sein, während die Spindelmutter ein an der Zahnstange abwälzendes, angetriebenes Zahnrad umfasst. Umgekehrt könnte auch die Spindelmutter eine mit einem Bandkörper gekoppelte, vorzugsweise vertikale Zahnstange umfassen, die über ein am Basisrahmen angeordnetes, angetriebenes Ritzel (in diesem Fall die "Spindel") auf- und ab bewegbar ist. Höchst bevorzugt handelt es sich bei der Spindel jedoch um eine schraubenartige Welle, entlang derer eine komplementär zum Wellenprofil geformte Wellenmutter (Spindelmutter) verschraubbar ist.

Ein erfindungsgemäßes Fördersystem nach einer ersten Ausführungsform umfasst dabei einen Basisrahmen, der sich in einer vorzugsweise horizontal in Förderrichtung X, sowie einer dazu quer verlaufenden, ebenfalls vorzugsweise horizontalen Breitenrichtung Y erstreckt. Der Basisrahmen stützt mittelbar oder unmittelbar wenigstens einen unteren Bandkörper, der in einer zur Förderrichtung X und zur Breitenrichtung Y senkrecht verlaufenden Höhenrichtung Z in einer Höhe angeordnet ist. Die Höhe ist in einer einfachen Ausführungsform im Wesentlichen fest und nicht veränderlich. Die "Förderrichtung X" kann im Folgenden sowohl die Richtung X als auch deren Gegenrichtung sein. Beide Fälle sollen unter "Förderrichtung X" zusammengefasst sein. Der Basisrahmen stützt außerdem vier Hubsäulen, die an den Ecken eines gedachten Vierecks, insbesondere Rechtecks, an dem Basisrahmen angeordnet sind und sich jeweils in Z-Richtung nach oben erstrecken. Vorzugsweise, aber nicht zwingend, entsprechen Länge und Breite des gedachten Rechtsecks derjenigen des Basisrahmens, so dass die Hubsäulen an den Ecken des Rahmens stehen. In jeder Hubsäule ist eine Spindel angeordnet, die durch Rotation um ihre in Z-Richtung verlaufende Drehachse eine auf der Spindel sitzende Spindelmutter in Z-Richtung auf- bzw. abwärts bewegen kann. Die Spindelmuttern tragen dabei gemeinsam wenigstens einen oberen Bandkörper, der aufgrund der vertikalen Verfahrbarkeit der Spindelmuttern in seiner Höhenposition frei einstellbar ist. Der wenigstens eine untere Bandkörper kann anstatt am Basisrahmen bevorzugt ebenfalls an den Hubsäulen befestigt sein.

Anstatt an den Ecken eines Vierecks könnten die Hubsäulen auch an den Ecken eines Trapezes oder sonstigen Vierecks angeordnet sein, falls es die räumlichen Gegebenheiten erfordern. So könnte bspw. ein Paar Hubsäulen in Y-Richtung einen größeren Abstand haben als das andere Paar. Generell sind die Hubsäulen so zu platzieren, dass der Zugang in den von ihnen umschriebenen Raum bestmöglich gewährleistet ist für die Anordnung von Bearbeitungstools.

Erfindungsgemäß ist vorgesehen, dass wenigstens eine Hubsäule nicht durch einen oberhalb ihrer Spindelmutter in X-Richtung verlaufenden ortsfesten Längsverbinder mit einer anderen Hubsäule verbunden ist. Durch den bewussten Verzicht auf eine solche Längsversteifung für wenigstens eine Hubsäule ergibt sich unmittelbar ein verbesserter Zugang in denjenigen Raum, der von den oberen Enden der vier Hubsäulen bzw. ihren unteren Fußpunkten auf dem Basisrahmen in der Form eines Quaders definiert wird (unter einem in X-Richtung verlaufenden Längsverbinder ist ein abstützendes Element zu verstehen, welches zwei in X-Richtung beabstandete Hubsäulen mittelbar oder unmittelbar verbindet).

Der Umstand, dass die wenigstens eine Hubsäule aufgrund der fehlenden Abstützung in X-Richtung in ihrer diesbezüglichen Stabilität geschwächt wird, wird vorteilhaft durch die sich daraus ergebende verbesserte Zugänglichkeit des vorgenannten Raumes mehr als kompensiert. Dies gilt insbesondere, wenn die in X-Richtung auf die Säulen einwirkenden Kräfte (insbesondere Beschleunigungs- oder Bremskräfte der oberen Bandkörper) gering sind und/oder wenn sich zwei oder alle drei der verbleibenden Hubsäulen unverändert in X-Richtung gegenseitig stützen.

Dieser Fall wäre beispielsweise gegeben durch einen L-förmigen Oberrahmen, der drei der vier Hubsäulen an ihrem jeweiligen oberen Ende abstützt, wobei sich ein Schenkel des L's in Förderrichtung X erstreckt. Auch eine Ausführungsform, bei der die einander jeweils in Y-Richtung gegenüber stehenden Hubsäulen durch einen Querträger miteinander verbunden sind, ohne dass ein in X-Richtung führender Längsträger vorgesehen ist, gestattet den ungestörten Zugang zu den zwischen den oberen und unteren Bandkörpern geförderten Gütern von oben.

Eine weiterhin bevorzugte Ausführungsform sieht vor, dass wenigstens eine Hubsäule weder in X-, noch in Y-Richtung oberhalb ihrer Spindelmutter mit einer anderen Hubsäule abstützend verbunden ist, also in Z-Richtung frei nach oben auskragt. Zwar umfasst diese Lösung nicht mehr den Fall, dass sich in Y-Richtung gegenüberliegende Hubsäulen mittels Querträgern gegenseitig stützen. Allerdings wird der Zugang rund um die wenigstens eine freistehende Hubsäule in den zuvor beschriebenen Raum weiter verbessert.

Eine besonders bevorzugte Ausführungsform der Erfindung schließlich sieht vor, dass wenigstens zwei Hubsäulen ohne Längs- und Querverbinder zu anderen Hubsäulen angeordnet sind, also frei nach oben in Z-Richtung auskragen. Diese Lösung umfasst den Fall, dass die zwei anderen Hubsäulen in Längs- oder in Querrichtung miteinander verbunden oder ebenfalls freistehend in Z-Richtung nach oben auskragend ausgeführt sind. Ein L-förmiger Oberrahmen fällt nicht mehr unter diese Kriterien, so dass sich erneut ein verbesserter Zugang in den Innenraum ergibt.

Bevorzugt sind alle Hubsäulen freistehend ausgeführt, um maximale Zugangsfreiheit zu haben.

Ein besonders guter Zugang in den von den Hubsäulen umschriebenen Raum ergibt sich ferner dadurch, dass ein oberhalb des wenigstens einen unteren Bandkörpers bestehender X-Abstand der Hubsäulen mindestens halb so groß ist wie die X-Länge eines oberen oder unteren Bandkörpers. Die maximale Breite in Y-Richtung der zu fördernden Güter wird vorzugsweise ausschließlich durch den Y-Abstand der Hubsäulen bestimmt, der im Zwischenraum zwischen dem wenigstens einen unteren Bandkörper und dem wenigstens einen oberen Bandkörper besteht. Zweckmäßigerweise ist dieser Abstand möglichst groß, um möglichst breite Güter fördern zu können.

Nach einer weiteren vorteilhaften Ausführungsform der Erfindung bildet die an jeder Hubsäule angeordnete Spindel samt zugehöriger Spindelmutter jeweils einen Hubmechanismus, wobei alle vier Hubmechanismen miteinander gekoppelt und manuell oder automatisiert synchron betätigbar sind. Die Kopplung dient dazu, alle Spindeln gleichzeitig in Rotation zu versetzen, so dass sich alle Spindelmuttern in gleicher Weise auf- oder abwärts bewegen. Dadurch erfolgt ein gleichmäßiges Anheben oder Absenken des von den Spindelmuttern getragenen wenigstens einen oberen Bandkörpers. Diese Höhenverstellung kann aufgrund der Kopplung aller Spindeln nicht nur schnell, sondern auch hochpräzise erfolgen, so dass der oder die oberen Bandkörper absolut translatorisch bewegt werden. Die Kopplung lässt sich zweckmäßigerweise dadurch realisieren, dass jede Spindel an ihrem unteren Ende (oberhalb, innerhalb oder unterhalb des Basisrahmens) auf gleichem Höhenniveau jeweils ein drehfest mit der Spindel verbundenes Zahnrad oder eine Riemenscheibe aufweist, wobei eine passende Kette bzw. ein Zahnriemen geschlossen um alle Zahnräder bzw. Riemenscheiben der einzelnen Hubsäulen herumgeführt und geeignet vorgespannt wird. Durch manuelle oder motorische Rotation wenigstens einer der vier Spindeln erfahren die weiteren Spindeln aufgrund der Kopplung die gleiche Drehbewegung, so dass sich die von den Spindeln getragenen Spindelmuttern alle gleichzeitig und gleichmäßig auf- bzw. abwärts bewegen. Dies vermeidet ein Verkanten oder Verspannen der Querträger bzw. der Bandkörper zwischen den Hubsäulen. Ein manueller Antrieb kann beispielsweise durch eine kleine Kurbel, ein Handrad, oder eine Verstellschraube gebildet werden, welche an einem oberen Ende einer Hubsäule drehfest mit der zugehörigen Spindel verbunden ist. Allerdings ist auch die Kombination mehrerer manuell betätigbarer Handräder oder automatisiert betriebener Antriebe möglich, die wahlweise an einer oder mehrerer der Spindeln angreifen können. Automatische Antriebe könnten dabei elektronisch synchronisiert werden, so dass auf eine mechanische Kopplung der einzelnen Spindeln in diesem Fall sogar verzichtet werden könnte.

Eine statt eines Zahnriemens verwendete Kette gestattet vorteilhaft das Herausnehmen oder Einfügen von Gliedern, so dass auch variierende Y- oder X-Abstände der einzelnen Spindeln leichter realisierbar sind. Ferner reduziert sich gegenüber einer Verwendung eines Zahnriemens die Gefahr des Überspringens, und eine Kette ist widerstandsfähiger und verschleißfester als ein Zahnriemen.

Vorzugsweise ist für jede Spindelmutter eine Linearführung vorgesehen, mittels derer die jeweilige Spindelmutter gegen Verdrehen in einer X-Y-Ebene und/oder gegen Verkippen relativ zu einer X-Y-Ebene gesichert ist. Dadurch ergibt sich eine besonders genaue Führung der Spindelmutter und damit des wenigstens einen oberen Bandkörpers.

Nach einer vorteilhaften Ausführungsform der Erfindung ist vorgesehen, dass sich von einer Spindelmutter oder einer daran montierten Halterung ein Querträger zu der Spindelmutter oder einer daran montierten Halterung der in Y-Richtung gegenüberliegenden Hubsäule erstreckt. An diesem Querträger ist der wenigstens eine obere Bandkörper in Y-Richtung verschieblich gelagert. Während der Querträger durch die vertikale Verfahrbarkeit der Spindelmutter in Z-Richtung positioniert werden kann, erfolgt die Positionierung des wenigstens einen Bandkörpers in Y-Richtung durch Querverschieben des Bandkörpers in Y-Richtung entlang des Querträgers. Bevorzugt erfolgt die Verschiebung manuell. Denkbar ist jedoch auch eine automatische Positionierung, etwa durch Linearantriebe. Vorzugsweise erstreckt sich der Querträger möglichst lang in Y-Richtung, so dass sich der wenigstens eine obere Bandkörper entsprechend frei über die ganze Breite an einer geeigneten Y-Position innerhalb des von den Hubsäulen definierten Raumes positionieren lässt. Für den besonders bevorzugten Fall, dass mindestens oder genau zwei obere oder untere Bandkörper vorgesehen sind, werden beide Bandkörper in Y-Richtung verschieblich an den Querträgern gelagert und sind daher beide entsprechend frei positionierbar.

Um den wenigstens einen oberen wie auch den wenigstens einen unteren Bandkörper stabil positionieren zu können sind pro Bandkörper mindestens zwei Querträger vorgesehen, die von in Y-Richtung einander gegenüberliegenden Hubsäulenpaaren getragen werden. Während der wenigstens eine obere Bandkörper durch in der Höhe verfahrbare Spindelmuttern und die damit verbundenen Querträger gehalten wird, können die den unteren Bandkörper tragenden Querträger weitgehend ortsfest an den Hubsäulen oder am Basisrahmen befestigt sein. Nach einer besonderen Ausführungsform der Erfindung ist jedoch vorgesehen, dass auch die Höhe des unteren Bandkörpers einstellbar ist, beispielsweise durch an den Hubsäulen angeordnete Rast-, Klemm- oder Verstellmechanismen. Dadurch ergibt sich der Vorteil, dass die Höhenposition des wenigstens einen oberen Bandkörpers durch die vertikale Dicke der zu fördernden Packung nicht zwingend festgelegt ist. Stattdessen können oberer und unterer Bandkörper einen zwischen ihnen festzulegenden vertikalen Abstand auch auf unterschiedlichen Höhenniveaus einnehmen. Dies steigert erneut die Flexibilität des Fördersystems.

Obwohl theoretisch die Verwendung nur eines unteren und nur eines oberen Bandkörpers zum Transport der zu fördernden Güter ausreichen könnte (und dabei maximale Zugänglichkeit zu geförderten Gütern bieten würde), werden bevorzugt wenigstens zwei obere und/oder untere Bandkörper verwendet, um die Lage des geförderten Gutes im Raum besser festlegen zu können. So könnte ein oberer Bandkörper gemeinsam mit zwei zueinander in Y-Richtung beabstandeten unteren Bandkörpern eingesetzt werden, so dass sich in Förderrichtung X gesehen drei Berührungspunkte zwischen den Bändern der Bandkörper und dem Produkt ergeben. Umgekehrt können auch zwei obere Bandkörper einem unteren Bandkörper gegenüberliegen. Eine besonders zweckmäßige und stabile Produktförderung ergibt sich durch die Verwendung von jeweils zwei zueinander in Y-Richtung beabstandeten oberen und unteren Bandkörpern, wodurch sich vier Kontaktpunkte bzw. -linien zwischen den Bandkörpern und dem Produkt ergeben. Ein Verdrehen und/oder Verschieben der Produkte während der Förderung ist dadurch weitgehend ausgeschlossen. Ferner kann das so geförderte bzw. gehaltene Produkt auch gegen ein Verkippen um eine in Förderrichtung X verlaufende gedachte Kippachse bestmöglich gesichert werden, indem die Y-Abstände der Bandkörper möglichst groß gewählt werden.

Vorzugsweise liegen die oberen und unteren Bandkörper in Z-Richtung dabei fluchtend übereinander. Dies ist jedoch nicht zwingend erforderlich. Vielmehr gestattet die horizontale Verschiebbarkeit jedes einzelnen Bandkörpers entlang seiner Querstreben eine beliebige Positionierung jedes Bandkörpers in Y-Richtung, so dass ein Produkt auf seiner Oberseite beispielsweise durch zwei eng nebeneinander angeordnete obere Bandkörper gehalten wird, während die unteren Bandkörper in Y-Richtung weit beabstandet sind. Dies könnte zweckmäßig sein für den Fall, dass das Produkt in der Mitte seiner Unterseite mit einem Aufdruck zu versehen ist. Die weit auseinander positionierten unteren Bandkörper stören hierbei nicht. Am Rand der Oberseite des Produkts könnte ein von dort bis auf die Seitenwand herunterzuklappendes Siegel anzubringen sein, so dass die oben in der Mitte des Produkts eng beieinander liegenden oberen Bandkörper hier ebenfalls nicht stören.

Die Anordnung der oberen Bandkörper mit den sie tragenden Querträgern, deren Halterungen an den Spindelmuttern und ein die oberen Bandkörper antreibender Motor wird insgesamt auch als "Oberläufer" bezeichnet. Entsprechend wird die Anordnung der unteren Bandkörper mit ihrem Motor, den zugehörigen Querträgern und deren Halterungen an den Hubsäulen oder dem Basisrahmen "Unterläufer" genannt.

Nach einer vorteilhaften Ausführungsform der Erfindung weist ein einen Bandkörper tragender Querträger entlang seiner Y-Erstreckung eine Folge von Rastnasen auf. Die Rastnasen dienen dazu, die Y-Position des Bandkörpers entlang des Querträgers genau einstellen und sicher beibehalten zu können. Außerdem wird ein Schiefstellen des Bandes (und damit der Förderrichtung) oder ein Verkanten des Bandkörpers vermieden.

Die Rastnasen bilden einen Teil eines Rastmechanismus, der automatisiert oder manuell (besonders bevorzugt werkzeuglos) betätigt werden kann. Ein mit dem Bandkörper gekoppelter Rasthebel ist dazu aus einer Löseposition, in welcher er die Rastnasen freigibt, in eine Arbeitsposition bewegbar, in welcher ein Eingriff in eine oder mehrere der Rastnasen erfolgt, um dadurch den Bandkörper in seiner Y-Position entlang des Querträgers festzulegen. Der Rasthebel kann in der Arbeitsposition unmittelbar selbst in die Rastnasen des Querträgers eingreifen. Der Eingriff kann alternativ auch über ein von dem Rasthebel beaufschlagtes Zwischenteil bewirkt werden, welches seinerseits in die Rastnasen eingreift bzw. diese freigibt. Der Eingriff kann gleichzeitig auch in mehrere Rastnasen erfolgen, um eine besonders stabile Positionierung zu erreichen. Vorzugsweise verfügt jeder Bandkörper über wenigstens zwei Rastmechanismen, von denen jeder jeweils mit einem von wenigstens zwei Querträgern zusammenwirkt, welche den Bandkörper tragen.

Erfolgt die Positionierung der Bandkörper in Y-Richtung automatisch, etwa durch Linearantriebe mit Encodern, so könnte auf die Rastmechanismen der vorgenannten Art verzichtet werden.

In der Löseposition lässt sich der Bandkörper erfindungsgemäß frei entlang des Querträgers in Y-Richtung verschieben. Um die Einnahme einer vorderfinierten Y-Position zu erleichtern kann der Querträger zusätzlich zu den Rastnasen in Y-Richtung eine rasterartige Profilierung aufweisen, in welche eine mechanische Positionierhilfe eingreift. Dabei kann es sich um eine Folge von in Y-Richtung eng hintereinander in den Querträger eingebrachten Vertiefungen handeln, in welche eine am Rastmechanismus federnd gelagerte Kugel eingreift. Während des Verschiebens gibt die nacheinander in die einzelnen Profilvertiefungen hineinrastende Kugel eine entsprechende Auswahl von Y-Positionen vor, die beispielsweise in einem Abstand von vorzugsweise 2 bis 5mm liegen. Aus den dazwischen liegenden Verschiebepositionen drängt die Kugel den Rastmechanismus heraus. Zugleich sind die Vertiefungen zweckmäßigerweise so gewählt, dass an diesen Positionen die Rastnasen des Querträgers den Rastnasen des Rasthebels oder des Zwischenteils geeignet versetzt gegenüberliegen, so dass durch Umschwenken des Rasthebels an diesen Positionen der gegenseitige Eingriff der Rastnasen gut möglich ist und nicht etwa zwei Zähne aufeinander stoßen. Die Rastnasen des Querträgers können auch gleichzeitig als Profilvertiefungen dienen, indem die federnde Kugel auf den Rastnasen entlangläuft, statt in eigens für sie vorzusehende Vertiefungen eingreifen zu müssen.

Eine besonders zweckmäßige Ausführungsform der Erfindung sieht vor, dass der Rasthebel in der Löseposition mit einem Abschnitt in den Bereich zwischen dem oberen und unteren Bandkörper hineinragt. Ein Gütertransport ist in diesem Fall nicht möglich, da die transportierten Güter an den hineinragenden Hebelabschnitt anschlagen und sofort erkennbar hängen bleiben. Dies setzt den Bediener im Betrieb in Kenntnis darüber, dass der Bandkörper in seiner Y-Position entlang des Querträgers noch nicht gesichert ist, der Rasthebel also noch in die Arbeitsposition umzulegen ist.

Jeder Bandkörper umfasst wenigstens einen umlaufenden Endlosriemen, der in Transportrichtung über vordere und hintere Riemenscheiben oder Rollen umgelenkt und/oder angetrieben wird. Die Y-Breite des Riemens ist vorzugsweise eher gering, um nicht zu viel der Oberfläche der geförderten Packungen zu bedecken. Die Dicke der Riemen in Z-Richtung ist grundsätzlich frei wählbar und richtet sich nach den Anforderungen an die zwischen Packung und Riemen aufzubringenden Reibkräfte in X- und Y-Richtung bzw. Klemmkräfte in Z-Richtung. Vorzugsweise sind die Riemen des wenigstens einen unteren Bandkörpers etwa 1 mm dick, während die Riemen des wenigstens einen oberen Bandkörpers eine Dicke von etwa 2 bis 3 mm aufweisen. Je nach Flexibilität und Kompressibilität insbesondere der Riemen des oberen Bandkörpers lassen sich dadurch auch Schwankungen in der Höhe der einzelnen Packungen ausgleichen.

Der Riemen wenigstens eines oberen und/oder unteren Bandkörpers wird über einen Motor angetrieben, um die zwischen den Bandkörpern befindlichen Güter zu fördern (der Antrieb nur eines Riemens könnte dann genügen, wenn der Riemen des anderen Bandkörpers ausreichend reibungsarm gelagert und mitbewegbar ist). Der den wenigstens einen oberen Bandkörper antreibende Motor ist vorzugsweise gemeinsam mit einem der Querträger, welcher den wenigstens einen Bandkörper trägt, an einer Spindelmutter bzw. einer daran angeordneten Halterung befestigt, so dass sich der Motor gemeinsam mit dem Bandkörper in Z-Richtung verfahren lässt.

Der Motor für den unteren Bandkörper (dieser lässt sich nach einer besonderen Ausführungsform ebenfalls in Z-Richtung verfahren), ist vorzugsweise gemeinsam mit einem der Querträger für die unteren Bandkörper an dem Basisrahmen, den Hubsäulen, oder einer daran angeordneten Halterung befestigt. Der weitgehend identische Aufbau von Oberläufer und Unterläufer gestattet die Verwendung von Gleichteilen, was die Teilevielfalt und die Lagerkosten vorteilhaft reduziert.

Von jedem Motor erstreckt sich jeweils eine Welle in Y-Richtung zu einer Riemenscheibe des wenigstens einen zugehörigen Bandkörpers, um ein Drehmoment auf den Riemen zu übertragen. Die Riemenscheibe ist dabei drehfest, aber in Y-Richtung verschieblich auf der Welle gelagert, um den Bandkörper in Y-Richtung frei wählbar positionieren zu können.

Eine besonders zweckmäßige Ausführungsform der drehfesten Verbindung der Riemenscheibe, die nicht auf die Anwendung in der erfindungsgemäßen Fördervorrichtung beschränkt ist, sieht vor, dass die Riemenscheibe (oder jedes andere, mit einem Drehmoment zu beaufschlagende, verschiebliche Maschinenelement) mittels zweier gegenläufig zueinander angeordneter Freilaufhülsen auf der Welle befestigt wird (Freilaufhülsenkopplung). Da Freilaufhülsen nahezu spielfrei in Sperrrichtung wirken, ergibt der Einsatz zweier gegenläufig eingesetzter Freilaufhülsen eine drehfeste Verbindung zwischen Riemenscheibe und Welle in beide Drehrichtungen ohne ein nennenswertes Drehwinkelspiel. Dadurch wird erfindungsgemäß sichergestellt, dass die Riemen der Bandkörper genau angetrieben und die aktuelle X-Position der Güter (im dynamischen wie im statischen Betrieb) entsprechend genau festgelegt werden kann. Zugleich bleiben die beiden Freilaufhülsen entlang der Welle gemeinsam frei verschieblich. Anders wären die Verhältnisse bei einer herkömmlichen drehfesten, aber verschieblichen Verbindung zwischen Riemenscheibe und Welle, bei der die Welle in Umfangsrichtung profiliert ist und die Riemenscheibe das entsprechende Gegenprofil (bspw. Vierkantprofil) aufweist, In diesen Fällen ist ein Spiel kaum zu vermeiden, was zu unerwünschten Betriebsgeräuschen und Positionierfehlern führt. Letztere sind außer bei der Produktbearbeitung im Fördersystem auch dann kritisch, wenn Produkte von stromaufwärts angeordneten Förderern übernommen oder an stromabwärts angeordnete Förderer übergeben werden sollen.

Die Freilaufhülsenkopplung eignet sich vorteilhaft auch für ein- oder mehrspurige Transport-, Inspektions- oder Wägesysteme, Dabei sind für einzelne Spuren jeweils ein oder mehrere Bandkörper vorgesehen, die insbesondere über eine gemeinsame Welle antreibbar sein können. Dazu kann sich die Welle durch die die Riemen oder Bänder der einzelnen Bandkörper antreibenden Riemenscheiben oder Rollen hindurch erstrecken und mit ihnen über die Freilaufhülsenkopplung drehfest, aber verschieblich gekoppelt werden. So können einzelne Bandkörper entlang der Welle frei verschoben werden, etwa um Spuren zu definieren, Spurmittenabstände oder allgemein Abstände einzelner Bandkörper zu ändern oder die Anzahl von Bandkörpern pro Spur verändern und festlegen zu können.

Denkbar ist ferner eine Ausführungsform, bei der die Antriebswelle nicht unmittelbar durch die Antriebsscheiben oder -rollen der Bandkörper verläuft, sondern beabstandet dazu. Einzelne Antriebsverbindungen von der Antriebswelle zu den jeweiligen Bandkörpern sind dabei wieder über die Freilaufhülsenkopplung verschieblich mit der Welle gekoppelt, wobei sich die Bandkörper bzw. deren Antriebsscheiben oder -rollen entsprechend mitverschieben lassen (bspw. entlang nicht angetriebener Führungsmittel), um neue Positionen einnehmen zu können.

Natürlich lassen sich die Bänder oder Riemen der Bandkörper eines solchen Systems, insbesondere eines mehrspurigen Wägesystems, auch über mehrere, unabhängig voneinander betriebene Wellen antreiben, die jeweils eine oder mehrere Spuren bzw. deren zugehörige Bänder oder Riemen mittels Freilaufhülsenkopplung antreiben.

Die Freilaufhülsenkopplung lässt sich selbstverständlich auch "umgekehrt" nutzen, indem ein Drehmoment drehfest aber verschieblich von einer Riemenscheibe oder Rolle auf eine Welle übertragen wird.

Die beiden Freilaufhülsen können bevorzugt in eine an der Riemenscheibe ausgebildete Nabe eingepresst, geklebt oder auf andere, dem Fachmann an sich bekannte Weise kraft- und/oder formschlüssig befestigt werden.

Gegenüber dem Bandkörper wird die Riemenscheibe in Y-Richtung dadurch fixiert, dass sie auf beiden Seiten von zwei mit dem Bandkörper befestigten Lenkblechen eingefasst ist. Vorzugsweise dienen die Lenkbleche gleichzeitig als Übergabekufen, auf denen die geförderten Güter auf einen in Förderrichtung stromabwärts oder stromaufwärts benachbarten Förderer übergeben bzw. von diesem übernommen werden können.

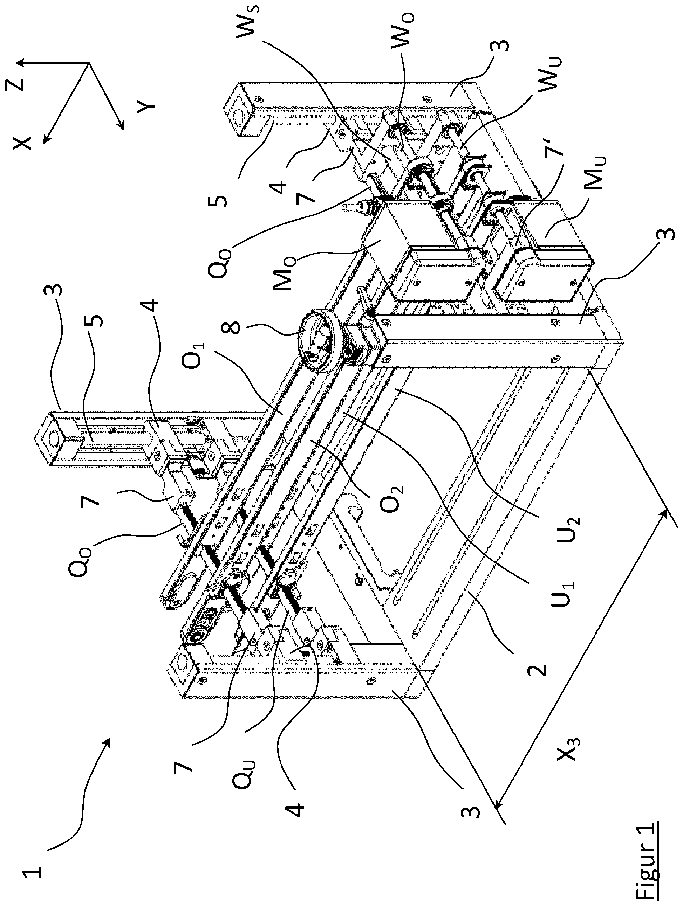

Nach einer vorteilhaften Ausführungsform der Erfindung sind die beiden jeweils einen oberen und unteren Bandkörper antreibenden Motoren beide auf der gleichen Seite (in Y-Richtung gesehen) der Bandkörper angeordnet, wo sie vorzugsweise auch in Z-Richtung im Wesentlichen übereinander liegen. Dies erleichtert die Verkabelung. Außerdem ist das versehentliche Vertauschen von Oberläufer und Unterläufer bei der Montage ausgeschlossen, da die Motoren in diesem Fall miteinander kollidieren würden, wie Fig.1 verdeutlicht. Auch Encoder, welche zur hochgenauen Erfassung der Drehbewegung der Motoren auf den jeweils angetriebenen Wellen positioniert sein können, liegen dann vorzugsweise auf der gleichen Seite (in Y-Richtung gesehen) der Bandkörper, ebenfalls vorzugsweise in Z-Richtung im Wesentlichen übereinander. Dadurch kann für beide Encoder eine gemeinsame, schützende Einhausung (insbesondere als Eingreifschutz) vorgesehen werden und auch die Verkabelung vereinfacht sich.

Nach einer weiteren vorteilhaften Ausführungsform der Erfindung ist vorgesehen, dass die Anordnung des wenigstens einen oberen Bandkörpers mit seinem Motor (Oberläufer) als modulare Einheit vollständig aus der Vorrichtung entnehmbar ist. Dies wird dadurch ermöglicht, dass die den Bandkörper tragenden Querträger und sein Motor gemeinsam von den Spindelmuttern lösbar sind. Zweckmäßigerweise geschieht dies über mit der Spindelmutter verschraubbare oder verrastbare Halterungen, die ihrerseits ein Ende eines Querträgers und - sofern in diesem Bereich auch der Motor sitzen soll - auch den Motor aufnimmt. Durch einfaches Lösen aller vier Halterungen von den vier Spindelmuttern lässt sich dann der Oberläufer aus der Vorrichtung entnehmen.

Gleiches gilt sinngemäß auch für den wenigstens einen unteren Bandkörper samt Motor (Unterläufer) mit dem Unterschied, dass hier die Querträger und der Motor nicht an der Spindelmutter, sondern an einer unmittelbar mit der Hubsäule oder dem Rahmen verbundenen Halterung angeordnet sind.

Eine vorteilhafte Ausführungsform der Erfindung sieht vor, dass wenigstens ein oberer oder unterer Bandkörper in X-Richtung aus dem Raum herausragt, der von den vier Hubsäulen umschrieben wird. Dies erleichtert die Übergabe oder Übernahme von Produkten auf/von benachbarten Transporteinheiten. Besteht außerdem eine unterschiedliche X-Länge zwischen oberem und unterem Bandkörper, so erlaubt der die Differenz bildende Freiraum die Anordnung zusätzlicher Bearbeitungstools (Druckköpfe, Sensoren, Etikettierer etc.). Vorzugsweise sind an den Bandkörpern mehrere in X-Richtung hintereinander liegende Trägeröffnungen vorgesehen, welche wahlweise für den hindurchzuführenden Querträger zur Verfügung stehen. Dadurch lässt sich die X-Position eines Bandkörpers relativ zu den Querträgern und somit zu den Hubsäulen verändern, wie auch aus den Figuren deutlich werden wird.

Um die von dem erfindungsgemäßen Fördersystem geförderten Güter während ihrer Förderung bearbeiten zu können, sind je nach Anforderung unterschiedliche Bearbeitungstools nötig. Bei diesen kann es sich handeln um: Kameras, Scanner, Lichtschranken, Etikettier- oder Druckeinheiten und sonstige, dem Fachmann an sich bekannte Lese- und/oder Kennzeichnungsmittel. Aufgrund der erfindungsgemäßen Aufhängung der Bandkörper an den Hubsäulen und durch den Verzicht auf Teile eines Oberrahmens lassen sich die Bearbeitungstools besonders flexibel an unterschiedlichen Positionen rund um die Bandkörper bzw. die von ihnen geförderten Güter anordnen. Vorzugsweise geschieht dies mittels wenigstens einer Trägereinheit zur Aufnahme solcher Bearbeitungstools, die relativ zum Basisrahmen in einer oder mehreren Richtungen des Raumes (X, Y, Z) manuell oder automatisch verstellbar ist. Ergänzend oder alternativ können einzelne Bearbeitungstools auch unmittelbar an den Bandkörpern befestigt werden. Daraus ergibt sich der Vorteil, dass eine Neupositionierung der Bearbeitungstools bei einer Veränderung der Höhenposition insbesondere des oberen Bandkörpers nicht nötig ist, da sich die Bearbeitungstools gemeinsam mit dem Bandkörper bewegen.

Die erfindungsgemäße Vorrichtung zeichnet sich auch dadurch aus, dass sie als Modul in unterschiedlichste Produktionslinien integrierbar ist, indem sie zwischen einer Zuführ- und einer Abführeinheit angeordnet wird. Die freie Verstellbarkeit der Bandkörper gestattet die bestmögliche Anpassung an die jeweils zu transportierenden bzw. zu bearbeitenden Produkte. Auch die gemeinsam auf den oberen oder unteren Querträgern angeordneten oberen oder unteren Bandkörper ("Oberläufer" bzw. "Unterläufer") lassen sich als Module entnehmen und beliebig austauschen, ohne dass insbesondere konstruktive Veränderungen an der Vorrichtung vorzunehmen wären.

Obwohl eine Ausführungsform mit vier Spindeln an den Ecken eines Rechtecks aufgrund der besonderen Stabilität bevorzugt wird, ist grundsätzlich auch eine Ausführung mit nur drei Hubsäulen und Spindeln denkbar. Diese können an drei der vier Ecken eines Vierecks, insbesondere Rechtecks, angeordnet sein, wobei jede Spindel einen nur durch sie verschiebbaren Querträger trägt oder mindestens zwei der Spindeln wenigstens einen Querträger gemeinsam tragen.

Nachfolgend wird eine Ausführungsform der Erfindung anhand von Figurenbeispielen näher beschrieben. Von den Figuren zeigt
- Fig. 1: eine perspektivische Ansicht einer erfindungsgemäßen Fördervorrichtung;
- Fig. 2: eine Seitenansicht der Vorrichtung nach Fig. 1;
- Fig. 3a, b: eine Detailansicht des Rastmechanismus' an den Querträgern;
- Fig. 4: zwei Hubsäulen mit dazwischen liegenden Querträgern und Motoren;
- Fig. 5a, b: den Einsatz von Freilaufhülsen auf den Antriebswellen;
- Fig. 6: die Vorrichtung nach Fig. 1 mit Bearbeitungstools; und
- Fig. 7: eine perspektivische Unteransicht des Basisrahmens mit Spindelkopplung.

Fig. 1 zeigt in perspektivischer Ansicht eine Ausführungsform der erfindungsgemäßen Fördervorrichtung. Ein im Wesentlichen rechteckiger Basisrahmen 2 erstreckt sich in einer Längsrichtung X und einer senkrecht dazu verlaufenden Breitenrichtung Y horizontal. Die X-Koordinate stellt zugleich die Förderrichtung dar, in welcher Güter mit der Vorrichtung zu fördern sind, wobei die Förderung in X-Richtung oder auch entgegengesetzt erfolgen kann. An den vier Ecken des Basisrahmens 2 sind jeweils Hubsäulen 3 angeordnet, die im Wesentlichen frei nach oben in eine Höhenrichtung Z auskragen. Jede Hubsäule 3 umfasst eine Spindel 5 und eine von der Spindel 5 in Z-Richtung bewegbare Spindelmutter 4. An ihren oberen und unteren Endbereichen sind die Spindeln 5 durch nicht näher bezeichnete Lager gelagert. Die Spindelmuttern 4 tragen jeweils eine Halterung 7 (nicht alle hier beschriebenen Elemente sind in den Figuren aufgrund der perspektivischen Darstellung und zur besseren Übersicht mit Bezugszeichen ausgestattet). Die einander in Y-Richtung gegenüberliegenden Halterungen 7 tragen jeweils gemeinsam einen oberen Querträger Qo. Die beiden oberen Querträger Qo ragen durch die vorderen und hinteren Endbereiche zweier oberer Bandkörper O₁, O₂, die in Y-Richtung zueinander beabstandet an den beiden oberen Querträgern Qo fixiert sind.

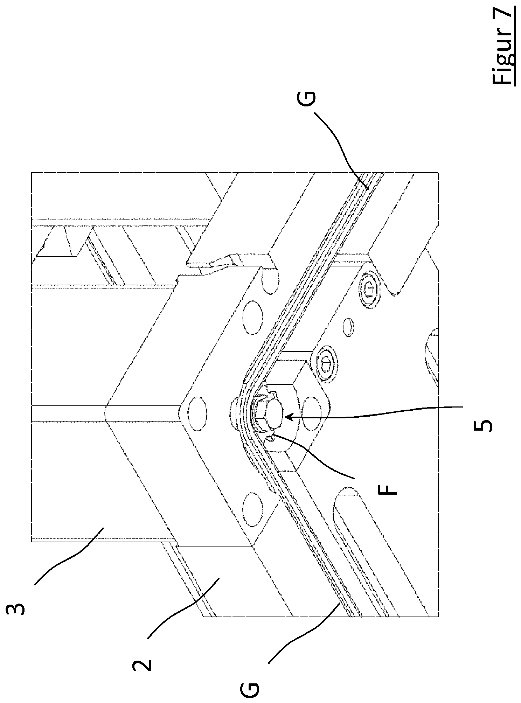

Die vier Spindeln 5 der Hubsäulen 3 sind an ihren unteren (vom Basisrahmen 2 verdeckten) Enden drehfest mit Zahnrädern F bestückt, die alle gemeinsam von einer in einer Nut im Basisrahmen 2 geführten vorgespannten Kette G umlaufen werden (siehe hierzu Fig. 7). Die Rotation einer Spindel wird so auf alle anderen Spindeln synchron übertragen. Die in Fig. 1 im Vordergrund gezeigte Hubsäule 3 ist am oberen Ende mit einem Handrad 8 ausgestattet, welches drehfest mit der Spindel dieser Hubsäule verbunden ist. Durch Rotation des Handrades drehen sich über die Kopplung der Kette G alle Spindeln 5 gleichsinnig, wodurch die auf den Spindeln sitzenden Spindelmuttern 4 synchron in Z-Richtung auf- oder abbewegt werden.

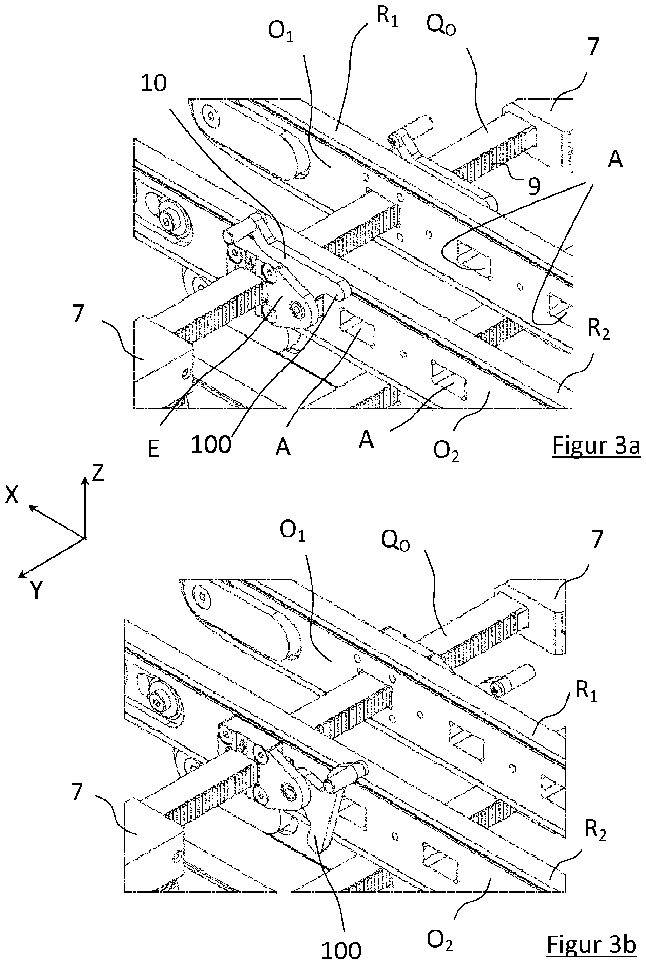

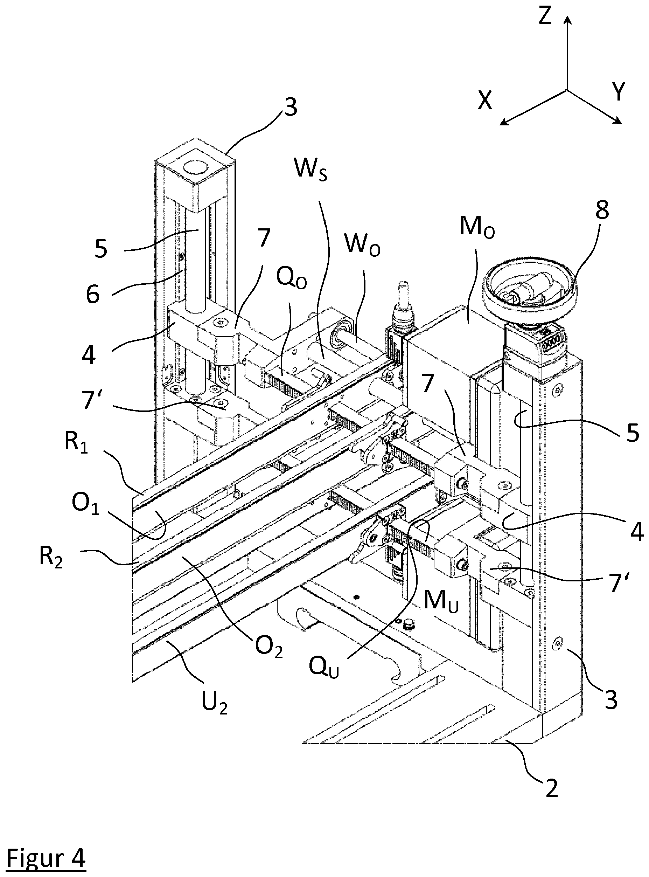

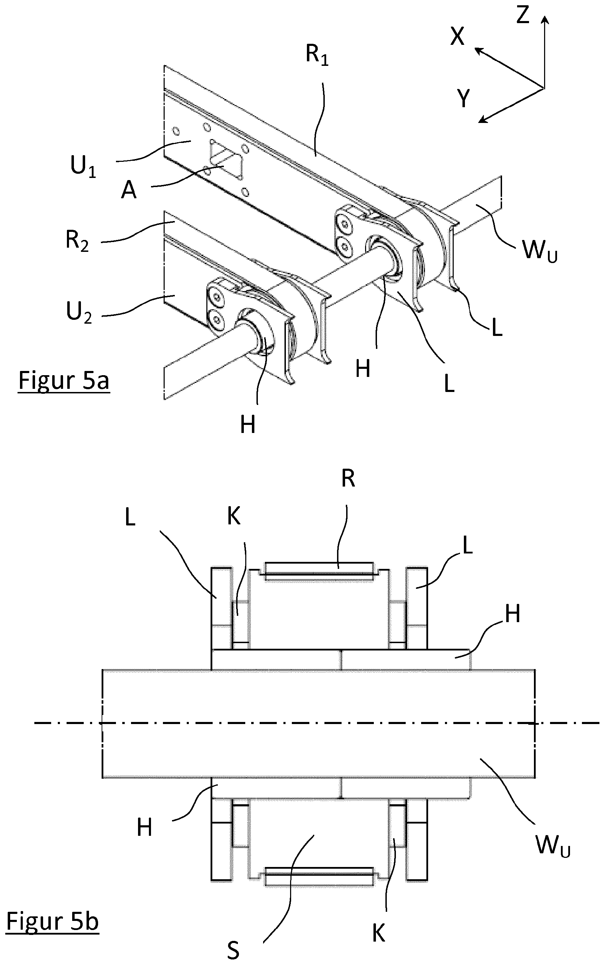

Die beiden oberen Bandkörper O₁, O₂ umfassen je einen Endlosriemen R₁, R₂ (siehe u.a. Fig. 3a, 3b, 4) der sich entlang seiner Längserstreckung in Z-Richtung an dem jeweiligen Bandkörper abstützt und an den Enden des Bandkörpers durch zwei Riemenscheiben S (s.a. Fig. 5) umgelenkt wird. Alle die Riemen umlenkenden oder antreibenden Teile sind vorzugsweise gleichartig gezahnt ausgeführt, so dass mit den dann als Zahnriemen auszuführenden Riemen (R₁, R₂) die Anzahl der durch die Antriebe erzeugten Störfrequenzen vorteilhaft reduziert werden kann, insbesondere auf nur eine einzige. Eine der Riemenscheiben jedes oberen Bandkörpers O₁, O₂ wird mittels eines oberen Motors Mo angetrieben. Dazu erstreckt sich eine Motorwelle Wo in Y-Richtung durch die beiden Riemenscheiben der beiden oberen Bandkörper, wobei jede dieser Riemenscheiben drehfest, jedoch in Y-Richtung verschieblich auf der Welle Wo angeordnet ist. Der die beiden oberen Bandköper O₁, O₂ antreibende Motor Mo ist gemeinsam mit den oberen Querträgern Qo an den Halterungen 7 der Spindelmuttern 4 befestigt, so dass der Motor Mo gemeinsam mit den Querträgern Qo einer Vertikalbewegung der Spindelmuttern 4 folgt, um die oberen Bandkörper O₁, O₂ in einer gewünschten Z-Höhe zu positionieren. Am motorseitigen Ende der oberen Bandkörper O₁, O₂ erstreckt zusätzlich zu dem oberen Querträger Qo eine Stabilisierungswelle W_{S} zwischen den Halterungen 7 durch die oberen Bandkörper O₁, O₂ hindurch, um diese abzustützen und die von dem Motor Mo angetriebene Welle Wo von Biegemomenten oder Zug/Druckspannungen weitgehend freizuhalten.

Unterhalb der oberen Bandkörper O₁, O₂ sind zwei untere Bandkörper U₁, U₂ angeordnet. Auch diese Bandkörper werden über zwei untere Querträger (von denen in Fig. 1 nur einer zu sehen ist) an den Hubsäulen 3 abgestützt. Die unteren Querträger Qu sind jedoch im Wesentlichen ortsfest an den Hubsäulen 3 angeordnet und insbesondere nicht über die Spindeln 5 in Höhenrichtung Z verfahrbar.

Die beiden unteren Bandkörper werden - analog zu den oberen Bandkörpern - über einen Motor Mu angetrieben, der in Z-Richtung unterhalb des Motors Mo angeordnet ist. Die beiden Motoren Mo, Mu liegen damit (in Y-Richtung) auf der gleichen Seite der Bandkörper, was die Verkabelung vereinfacht und eine versehentliche Montage verkehrt herum verhindert. Der obere Motor M_{O} ragt dabei in Z-Richtung nach oben auf die den oberen Bandkörpern O₁, O₂ abgewandte Oberseite. Entsprechend erstreckt sich der untere Motor Mu in Z-Richtung nach unten auf die den unteren Bandkörpern U₁, U₂ abgewandte Unterseite. Der Raum zwischen den Motoren wird so vorteilhaft freigehalten für die zu fördernden Güter.

Zwischen den oberen und den unteren Bandkörpern O₁, O₂, U₁, U₂ werden durch Antrieb der Bandkörper-Riemen diskrete Güter in X-Richtung durch das Fördersystem hindurch gefördert, wobei sie währenddessen, d.h. bevorzugt während sie sich bewegen, durch verschiedene Bearbeitungstools bearbeitet werden können.

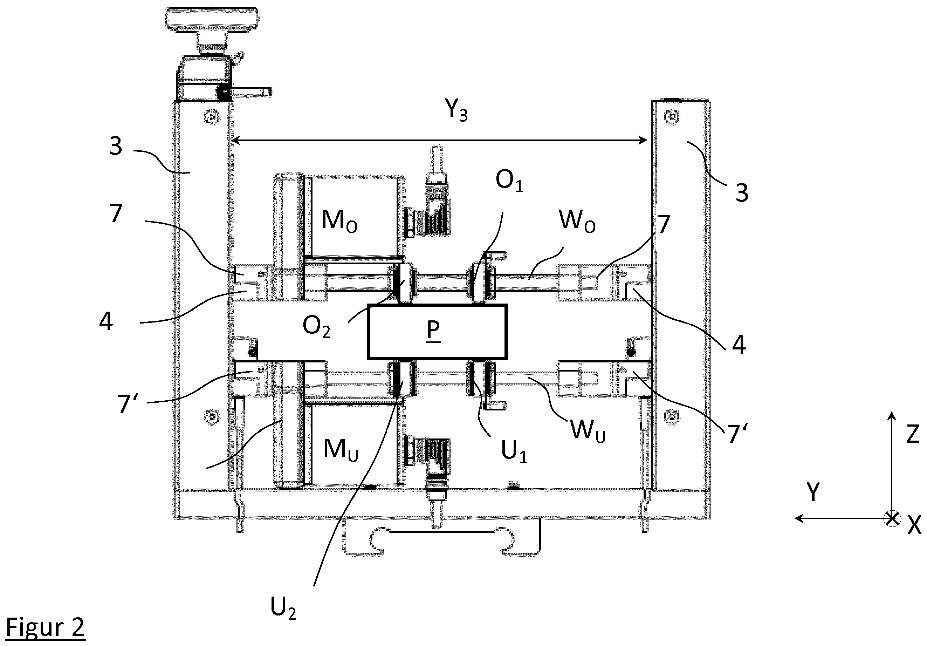

Fig. 2a zeigt die Vorrichtung gemäß Fig. 1 mit Blick in X-Richtung. Zu sehen sind zwei Hubsäulen 3, die zueinander einen lichten Abstand Y₃ in Y-Richtung haben. Ein zu förderndes Produkt P ist zwischen den oberen und unteren Bandkörpern O₁, O₂, U₁, U₂ angeordnet, welches in Richtung X (in diesem Fall aus der Zeichenebene heraus) gefördert werden soll (aus Gründen der Übersichtlichkeit ist nur in dieser Figur das Gut P gezeigt). Zu erkennen ist ferner, wie die beiden oberen Bandkörper angetrieben werden von dem oberen Motor M_{O}, dessen Welle W_{O} sich durch die beiden hier nicht näher bezeichneten Riemenscheiben der beiden oberen Bandkörper hindurch in Y-Richtung erstreckt. In gleicher Weise werden die beiden unteren Bandkörper U₁, U₂ vom unteren Motor Mu angetrieben. Zu sehen ist ferner, dass die beiden oberen Bandkörper samt Motor Mo mit Querträger und Wellen gemeinsam als "Oberläufer" über die beiden Halterungen 7 auf den Spindelmuttern 4 angeordnet sind, die mittels der (in dieser Ansicht verdeckten) Spindeln 5 entlang den Hubsäulen 3 auf- und abbewegbar sind. Die unteren Bandkörper und ihr Motor Mu sind ebenfalls über Halterungen 7' - mit denen gemeinsam sie als "Unterläufer" bezeichnet werden - an den Hubsäulen 3 angebracht, die Halterungen 7' sind jedoch - anders als die Halterungen 7 - im Wesentlichen ortsfest und nicht über die Spindeln vertikal beweglich.

Gut zu sehen ist in Fig. 2 ferner, dass der für die zu fördernden Güter P verfügbare Durchlass bestimmt wird einerseits durch den vertikalen Abstand der oberen und unteren Bandkörper und andererseits durch den horizontalen Abstand Y₃ der beiden (bzw. aller vier) Hubsäulen 3. Durch die Anordnung der Motoren Mo, Mu oberhalb bzw. unterhalb der Bandkörper wird dieser Durchlass vorteilhaft vollständig freigelassen, um Güter mit maximaler Y-Breite fördern zu können.

Fig. 3 zeigt die Befestigung der oberen Bandkörper O₁, O₂ in detaillierter Ansicht. In Fig. 3a ist einer der beiden oberen Querträger Qo gezeigt, der die beiden oberen Bandkörper O₁, O₂ durchragt und mit seinen Enden an den Halterungen 7 montiert ist (vergleiche Fig. 1). Der Querträger Qo ist entlang seiner Y-Erstreckung mit Rastnasen 9 versehen, deren Zahnflanken parallel zur Z-Richtung verlaufen. An jedem Bandkörper sind zwei Rasthebel 10 angeordnet, die aus einer Löse- in eine Arbeitsposition und zurück verschwenkbar sind. In der Arbeitsposition, wie sie in Fig. 3a dargestellt ist, greift ein von dem Rasthebel 10 beaufschlagtes Zwischenteil E in X-Richtung in die Rastnasen des Querträgers Qo ein, so dass das Zwischenteil E und mit ihm der jeweilige Bandkörper aus seiner durch die Rastnasen bestimmten Y-Position nicht verschoben werden kann.

In Fig. 3b ist der Rastmechanismus mit dem Rasthebel 10 in Löseposition dargestellt. In diesem Fall gelangt das Zwischenteil E außer Eingriff mit den Rastnasen des Querträgers Qo, so dass sich der jeweilige Bandkörper in Y-Richtung frei verschieben lässt. Gleichzeitig ragt ein freies Ende 100 des Rasthebels 10 in Z-Richtung in den Bereich zwischen den unteren und oberen Bandkörpern herab. Die Förderung eines Produktes wird in diesem Fall unterbunden und der Anlagenbetreiber erkennt unmittelbar, dass die Bandkörper in ihrer Y-Position noch nicht fixiert sind. Vorzugsweise bestehen alle Komponenten jedes Rastmechanismus jeweils aus miteinander verbundenen und somit unverlierbaren Einzelteilen. Durch besondere Farbgebung des Rasthebels, etwa leuchtend rot, kann dessen aktuelle Schwenkposition besonders leicht erkennbar gemacht werden. Durch eine an den Querträgern angeordnete Skala und/oder zusätzliche Positionierhilfen, etwa einen (nicht dargestellten) Kugelrastmechanismus, lassen sich bestimmte Y-Positionen für die Bandkörper besonders leicht einstellen.

Zweckmäßigerweise sind an jedem Bandkörper wenigstens zwei zueinander in X-Richtung beabstandete Rastmechanismen angeordnet, um die Ausrichtung jedes Bandkörpers parallel zur Förderrichtung X sicherstellen zu können. Wird jeder Bandkörper durch mindestens zwei Querträger gehalten, kann an jedem Querträger ein solcher Mechanismus angeordnet sein. Zu sehen ist ferner, dass jeder Bandkörper mehrere in X-Richtung zueinander beabstandete, etwa quaderförmige Trägeröffnungen A aufweist, von denen jeweils eine von dem Querträger Qo durchdrungen wird. Die X-Position der Bandkörper relativ zu den Querträgern lässt sich konfigurieren, indem die Querträger wahlweise durch eine der Trägeröffnungen A hindurch geführt werden.

Fig. 4 zeigt in perspektivischer Ansicht einen Teil der erfindungsgemäßen Fördervorrichtung mit Blick auf zwei Hubsäulen 3 und die dazwischen angeordneten Komponenten. Zu sehen sind wieder zwei Spindeln 5, die über jeweils eine Spindelmutter 4 und eine daran angeordnete Halterung 7 einen oberen Querträger Qo mit zwei daran befestigten oberen Bandkörpern O₁, O₂ trägt. An der im Hintergrund gezeigten Hubsäule 3 ist eine Linearführung 6 zu erkennen, welche die längs der Spindel 5 vertikal bewegte Spindelmutter 4 führt und gegen ein Verkippen sichert. Eine solche Führung ist an allen Hubsäulen für die Spindelmuttern 4 der Vorrichtung vorgesehen.

Die in Fig. 4 auf der rechten Seite gezeigte und von der Spindelmutter 4 gestützte Halterung 7 trägt einerseits den oberen Querträger Qo und andererseits den oberen Motor Mo. Die Spindel 5 der vorderen Hubsäule 3 (und durch die nicht gezeigte Kopplung mittels Kette oder Zahnriemen auch die drei anderen Spindeln) lassen sich über das am oberen Ende der im Vordergrund gezeigten Hubsäule befindliche Handrad 8 betätigen.

Zu sehen ist ferner der an jedem Bandkörper vorgesehene Rastmechanismus, der die Y-Position der Bandkörper entlang der als Zahnstangen ausgeführten Querträger festlegt.

Die in Fig. 1 zu sehende untere Antriebswelle Wu ist in Fig. 5a als vergrößerte Teilansicht dargestellt. Die Welle Wu ragt dabei durch zwei Riemenscheiben S der beiden unteren Bandkörper U₁ und U₂ hindurch. Jede Riemenscheibe S ist dabei drehfest, jedoch in Y-Richtung verschieblich auf der Welle Wu gelagert, um die Verschiebbarkeit des gesamten Bandkörpers in Y-Richtung zu erlauben. Die drehfeste Verbindung der Riemenscheiben auf der Welle Wu erfolgt dabei, indem zwei gegenläufig wirkende Freilaufhülsen H in die Nabe jeder der beiden Riemenscheiben S eingepresst werden (siehe Fig. 5b). Die Freilaufhülsen sind auf der Welle Wu in Y-Richtung frei verschieblich und auf ihrer Außenseite durch die Einpressung fest am Innendurchmesser der Riemenscheibe angeordnet. Die gegenläufig wirkenden Freilaufhülsen H bilden eine drehfeste Verbindung der jeweiligen Riemenscheibe S mit der Welle Wu mit extrem geringem Spiel in Umfangsrichtung bei gleichzeitig sehr leichter Verschiebbarkeit in Y-Richtung. Durch zwei jede Riemenscheibe S seitlich einfassende Lenkbleche L, die jeweils am Bandkörper befestigt sind, wird die Y-Position jeder Riemenscheibe relativ zum Bandkörper festgelegt, vorzugsweise ohne axiales Spiel. Zur möglichst reibungsfreien Lagerung sind in axialer Richtung zwischen den Lenkblechen und der Riemenscheibe Kunststoffscheiben K mit guten Gleitwerten angeordnet. Die Lenkbleche L haben auf ihrer dem Bandkörper abgewandten Seite eine leicht konische Kontur, mit der sie an benachbarte Fördereinrichtungen bzw. Förderbänder anschließen können, so dass die von dort zu empfangenden oder dorthin zu führenden Produkte möglichst stoßfrei übergeben werden können.

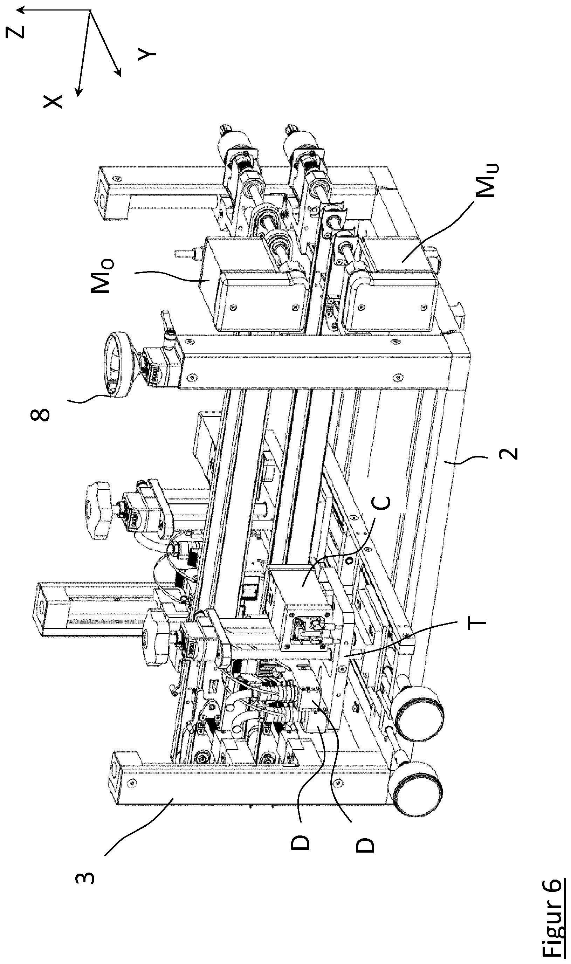

In Fig. 6 ist die erfindungsgemäße Vorrichtung gemäß Fig. 1 zu sehen, wobei hier eine Trägereinheit T mittelbar am Basisrahmen 2 angeordnet ist. Die Trägereinheit T ist über einen Kreuztisch sowie einen Hubmechanismus in X-, Y- und Z-Richtung relativ zum Basisrahmen 2 bzw. relativ zu den oberen und unteren Bandkörpern O₁, O₂, U₁, U₂ im Raum verfahrbar. An der Trägereinheit T sind als Bearbeitungstools eine Kamera C sowie zwei Druckköpfe D angeordnet, die seitlich zwischen den oberen und unteren Bandkörpern ein von diesen gefördertes Produkt bearbeiten können. Auf der dem Betrachter abgewandten Rückseite der Vorrichtung ist eine weiterere, nicht bezeichnete Trägereinheit mit gleichartiger Einstellbarkeit und Bearbeitungstools angeordnet, wobei sich diese von denen der ersten Trägereinheit T nach Art und Position unterscheiden können. Mehrere Trägereinheiten T können auch synchron positionierbar sein, etwa mittels beide Trägereinheiten gleichzeitig beaufschlagender Linearantriebe.

Fig. 7 zeigt in vereinfachter Teilansicht die drehfeste Ankopplung der Spindel 5 einer Hubsäule 3 an die weiteren Spindeln. Ein Abschnitt des Basisrahmens 2 ist in perspektivischer Ansicht schräg von unten dargestellt. Aus der an einer Ecke des Basisrahmens 2 angeordneten Hubsäule 3 erstreckt sich deren Spindel 5 durch den Basisrahmen hindurch nach unten, wo ein Zahnrad F drehfest mit der Spindel 5 verbunden ist. Eine nur vereinfacht dargestellte Kette G verläuft in einer Nut im Basisrahmen 2 und umschlingt das Zahnrad mit etwa 90°. Die Kette G führt zu den in gleicher Weise ausgebildeten weiteren Spindeln der anderen Hubsäulen und ist einstellbar vorgespannt. Indem die Kette alle Spindeln umläuft, überträgt sie das - bspw. mittels Handrad 8 - über eine der Spindeln eingebrachte Drehmoment auf alle anderen Spindeln, so dass deren Spindelmuttern synchron auf- und abbewegt werden können.

**Bezugszeichenliste**

| | | | |
|---|---|---|---|
| A | Trägeröffnung | X | Längsrichtung |
| C | Kamera | Y | Breitenrichtung |
| D | Druckkopf | Z | Höhenrichtung |
| E | Zwischenteil | X₃ | X-Abstand zweier Hubsäulen |
| F | Zahnrad | Y₃ | Y-Abstand zweier Hubsäulen |
| G | Kette | | |
| H | Freilaufhülse | 1 | Fördersystem |
| K | Kunststoffscheibe | 2 | Basisrahmen |
| L | Lenkblech | 3 | Hubsäule |
| M_{O}, M_{U} | oberer / unterer Motor | 4 | Spindelmutter |
| O₁, O₂ | obere Bandkörper | 5 | Spindel |
| P | zu förderndes Gut (Produkt) | 6 | Linearführung |
| Q_{O}, Q_{U} | oberer / unterer Querträger | 7, 7` | Halterung |
| R₁, R₂ | Riemen | 8 | Handrad |
| S | Zahn- oder Riemenscheibe | 9 | Rastnasen |
| T | Trägereinheit | 10 | Rasthebel |
| U₁, U₂ | untere Bandkörper | 100 | Abschnitt am Rasthebel |
| W_{O}, W_{U} | obere / untere Motorwelle | | |
| W_{S} | Stabilisierungswelle | | |

## Patentansprüche

1. Fördersystem (1) zur Förderung von diskreten Gütern (P), umfassend wenigstens einen oberen Bandkörper (O₁, O₂) und einen unteren Bandkörper (U₁, U₂) um die Güter (P) zwischen den oberen und unteren Bandkörpern transportieren zu können,
a) mit einem sich in einer Förderrichtung (X) und in einer horizontal quer dazu verlaufenden Breitenrichtung (Y) erstreckenden Basisrahmen (2), wobei der Basisrahmen (2) den wenigstens einen unteren Bandkörper (U₁, U₂) mittelbar oder unmittelbar stützt, der in einer zur Förder- und Breitenrichtung (X, Y) senkrecht verlaufenden Höhenrichtung (Z) angeordnet ist,
b) wobei an wenigstens drei Ecken eines in X-Y-Richtung verlaufenden, gedachten Vierecks, insbesondere Rechtecks, je eine in Z-Richtung verlaufende Hubsäule (3) an dem Basisrahmen angeordnet ist, welche über jeweils an der Hubsäule (3) höhenverschieblich gelagerte Spindelmuttern (4), die Teil eines Hubmechanismus sind, den wenigstens einen oberen Bandkörper (O₁, O₂) tragen, wobei
c) wenigstens eine Hubsäule (3) nicht durch einen oberhalb ihrer Spindelmutter (4) über einen in X-Richtung verlaufenden ortsfesten Längsverbinder mit einer anderen Hubsäule (3) verbunden ist.

2. Fördersystem nach Anspruch 1, **dadurch gekennzeichnet, dass** wenigstens eine Hubsäule (3) nicht durch einen oberhalb ihrer Spindelmutter (4) über einen in Y-Richtung verlaufenden ortsfesten Querverbinder mit einer anderen Hubsäule (3) verbunden ist.

3. Fördersystem nach Anspruch 1 oder 2, **dadurch gekennzeichnet, dass** wenigstens zwei Hubsäulen (3) oberhalb ihrer jeweiligen Spindelmutter (4) ohne ortsfeste Längs- und Querverbinder zu anderen Hubsäulen (3) in Z-Richtung frei nach oben ragen, um den allseitigen Zugang zu zwischen den unteren und oberen Bandkörpern (O₁, O₂, U₁, U₂) geförderten Gütern zu gewährleisten.

4. Fördersystem nach einem der vorigen Ansprüche, **dadurch gekennzeichnet,**
a) **dass** ein oberhalb des wenigstens einen unteren Bandkörpers (U₁, U₂) bestehender X-Abstand (X₃) der Hubsäulen (3) mindestens halb so groß ist wie die X-Länge eines oberen oder unteren Bandkörpers (O₁, O₂, U₁, U₂) und/oder
b) **dass** der oberhalb des wenigstens einen unteren Bandkörpers (U₁, U₂) und unterhalb des wenigstens einen oberen Bandkörpers (O₁, O₂) bestehende Y-Abstand (Y₃) der Hubsäulen (3) die maximale Y-Breite der zu fördernden Güter (P) bestimmt.

5. Fördersystem nach einem der vorigen Ansprüche, mit je einer Hubsäule (3) gemäß Anspruch 1 an allen vier Ecken des Vierecks, **dadurch gekennzeichnet, dass** jede Hubsäule (3) einen Hubmechanismus aufweist, wobei alle vier Hubmechanismen - vorzugsweise über ein zugfestes Kraftübertragungselement wie eine Kette oder ein Zahnriemen - miteinander gekoppelt und manuell oder automatisiert synchron derart betätigbar sind, dass alle Spindeln gleichzeitig in Rotation versetzt werden, so dass sich alle Spindelmuttern in gleicher Weise auf- oder abwärts bewegen.

6. Fördersystem nach einem der vorigen Ansprüche, **dadurch gekennzeichnet, dass** für jede Spindelmutter (4) eine Linearführung (6) vorgesehen ist, mittels derer die jeweilige Spindelmutter gegen Verdrehen in einer X-Y-Ebene und/oder gegen Verkippen relativ zu einer X-Y-Ebene gesichert ist.

7. Fördersystem nach einem der vorigen Ansprüche, **dadurch gekennzeichnet, dass** sich von einer Spindelmutter (4) oder einer daran montierten Halterung (7) ein Querträger (Qo) zu der Spindelmutter (4) oder einer daran montierten Halterung (7) der in Y-Richtung gegenüberliegenden Hubsäule (3) erstreckt, an welchem Querträger (Qo) der wenigstens eine obere Bandkörper (O₁, O₂) in Y-Richtung verschieblich gelagert ist.

8. Fördersystem nach dem vorhergehenden Anspruch, **dadurch gekennzeichnet, dass** der Querträger (Qo) entlang seiner Y-Erstreckung eine Folge von Rastnasen (9) aufweist, wobei ein mit dem wenigstens einen oberen Bandkörper (O₁, O₂) gekoppelter Rasthebel (10) aus einer Löseposition, in welcher er die Rastnasen freigibt, in eine Arbeitsposition bewegbar ist, in welcher er mittelbar oder unmittelbar in eine oder mehrere der Rastnasen (9) einrastbar ist, um dadurch den Bandkörper (O₁, O₂) in seiner Y-Position entlang des Querträger (Qo) festzulegen.

9. Fördersystem nach dem vorhergehenden Anspruch, **dadurch gekennzeichnet, dass** der Rasthebel (10) in der Löseposition mit einem Abschnitt (100) in den Bereich zwischen dem wenigstens einen oberen und unteren Bandkörper (O₁, O₂, U₁, U₂) hineinragt, um einen Gütertransport bei nicht eingerastetem Rasthebel (10) zu blockieren.

10. Fördersystem nach einem der Ansprüche 7 bis 9, **dadurch gekennzeichnet, dass** sich eine von einem Motor (Mo, Mu) antreibbare Welle (Wo, Wu) in Y-Richtung zu einer Riemen- oder Zahnriemenscheibe (S) des wenigstens einen oberen bzw. unteren Bandkörpers (O₁, O₂, U₁, U₂) erstreckt, die mit der Welle drehfest, aber in Y-Richtung verschieblich gekoppelt ist, vorzugsweise mittels zweier gegenläufig montierter Freilaufhülsen (H).

11. Fördersystem nach einem der Ansprüche 7 bis 10, **dadurch gekennzeichnet, dass** der wenigstens eine obere Bandkörper (O₁, O₂) mit einem ihm zugehörigen Motor (Mo) als modulare Einheit vollständig von der Vorrichtung (1) lösbar ist, indem die den Bandkörper tragenden Querträger (Qo) und der Motor (Mo) an einer mit der jeweiligen Spindelmutter (4) lösbar verbindbaren Halterung (7) montiert sind.

12. Fördersystem nach einem der vorigen Ansprüche, **dadurch gekennzeichnet, dass** der wenigstens eine untere Bandkörper (U₁, U₂) mit einem ihm zugehörigen Motor (Mu) als modulare Einheit vollständig von der Vorrichtung (1) lösbar ist, indem die den Bandkörper tragenden Querträger (Qo) und der Motor (Mu) als gemeinsame Einheit lösbar an den Hubsäulen montiert sind.

13. Fördersystem nach einem der vorigen Ansprüche, **dadurch gekennzeichnet, dass** sich wenigstens ein oberer oder unterer Bandkörper (O₁, O₂, U₁, U₂) in X-Richtung gesehen zu beiden Seiten einer Hubsäule (3) erstreckt.

14. Fördersystem nach einem der vorigen Ansprüche, **dadurch gekennzeichnet, dass** an dem Basisrahmen (2) wenigstens eine Trägereinheit (T) zur Aufnahme von Bearbeitungstools (C, D) angeordnet ist, welche mit dem zu fördernden Gut (P) zusammenwirken sollen.

15. Fördersystem nach dem vorherigen Anspruch, **dadurch gekennzeichnet, dass** Mittel vorgesehen sind, mit denen die Trägereinheit (T) zum Positionieren der Bearbeitungstools in X-, Y- und/oder Z-Richtung einstellbar ist.

## Claims

1. A conveyor system (1) for conveying discrete items (P), comprising at least an upper belt body (O₁, O₂) and a lower belt body (U₁, U₂) in order to be able to transport the items (P) between the upper and lower belt bodies,
a) comprising a base frame (2) extending in a conveying direction (X) and in a width direction (Y) running horizontally transversely thereto, wherein the base frame (2) indirectly or directly supports the at least one lower belt body (U₁, U₂) that is arranged in a vertical direction (Z) running perpendicularly to the conveying and width direction (X, Y),
b) wherein a lifting column (3),extending in the Z direction, is arranged in each case on the base frame at at least three corners of an imaginary quadrilateral, in particular rectangle, extending in the X-Y direction, which lifting columns support the at least one upper belt body (O₁, O₂) via spindle nuts (4) which are each vertically adjustably mounted on the lifting column (3) and are part of a lifting mechanism,
wherein
c) at least one lifting column (3) is not connected to another lifting column (3) by a stationary longitudinal connector extending in the X direction above a spindle nut (4) of the lifting column.

2. The conveyor system according to claim 1, **characterized in that** at least one lifting column (3) is not connected to another lifting column (3) by a stationary transverse connector extending in the Y direction above a spindle nut (4) of the lifting column.

3. The conveyor system according to either claim 1 or claim 2,
**characterized in that** at least two lifting columns (3) project freely upward in the Z direction above the particular spindle nut (4) thereof without stationary longitudinal and transverse connectors to other lifting columns (3) in order to ensure access on all sides to items conveyed between the lower and upper belt bodies (O₁, O₂, U₁, U₂).

4. The conveyor system according to any of the preceding claims,
**characterized in that**
a) an X distance (X₃) between the lifting columns (3), existing above the at least one lower belt body (U₂, U₂), is at least half as large as the X length of an upper or lower belt body (O₁, O₂, U₁, U₂) and/or
b) the Y distance (Y₃) between the lifting columns (3), existing above the at least one lower belt body (U₁, U₂) and below the at least one upper belt body (O₁, O₂), determines the maximum Y width of the items (P) to be conveyed.

5. The conveyor system according to any of the preceding claims, comprising in each case a lifting column (3) according to claim 1 at all four corners of the quadrilateral, **characterized in that** each lifting column (3) has a lifting mechanism, all four lifting mechanisms being coupled to one another, preferably via a tension-resistant force transmission element such as a chain or a toothed belt, and being manually or automatically synchronously actuatable such that all spindles are set in rotation at the same time and therefore all spindle nuts move up or down in the same manner.

6. The conveyor system according to any of the preceding claims,
**characterized in that** a linear guide (6) is provided for each spindle nut (4), by means of which linear guide the relevant spindle nut is secured against rotation in an X-Y plane and/or against tilting relative to an X-Y plane.

7. The conveyor system according to any of the preceding claims,
**characterized in that** a transverse member (Qo) extends from a spindle nut (4) or a holder (7) mounted thereon to the spindle nut (4) or to a holder (7) mounted thereon of the lifting column (3) that is situated opposite in the Y direction, on which transverse member (Qo) the at least one upper belt body (O₁, O₂) is mounted so as to be displaceable in the Y direction.

8. The conveyor system according to the preceding claim,
**characterized in that** the transverse member (Qo) comprises a sequence of latching lugs (9) along its Y extension, a latching lever (10) coupled to the at least one upper belt body (O₁, O₂) being movable from a release position, in which it releases the latching lugs, into a working position, in which it can be indirectly or directly latched into one or more of the latching lugs (9) in order to thereby fix the belt body (O₁, O₂) in its Y-position along the transverse member (Qo).

9. The conveyor system according to the preceding claim,
**characterized in that,** in the release position, a portion (100) of the latching lever (10) projects into the region between the at least one upper and lower belt body (O₁,O₂,U₁, u₂) in order to block transport of items when the locking lever (10) is not engaged.

10. The conveyor system according to any of claims 7 to 9,
**characterized in that** a shaft (Wo, Wu) that can be driven by a motor (Mo, Mu) extends in the Y direction to a belt or toothed belt pulley (S) of the at least one upper or lower belt body (O₁, O₂, U₁, U₂), which belt or toothed belt pulley is coupled to the shaft so as to be rotationally fixed but displaceable in the Y direction, preferably by means of two freewheel sleeves (H) mounted contradirectionally.

11. The conveyor system according to any of claims 7 to 10,
**characterized in that** the at least one upper belt body (O₁, O₂), together with a motor (Mo) associated therewith, can be detached completely from the device (1) as a modular unit by the transverse member (Qo), which supports the belt body, and the motor (Mo) being mounted on a holder (7) that can be detachably connected to the particular spindle nut (4).

12. The conveyor system according to any of the preceding claims,
**characterized in that** the at least one lower belt body (U₁, U₂), together with a motor (Mu) associated therewith, can be detached completely from the device (1) as a modular unit by the transverse member, which supports the belt body (Qo), and the motor (Mu) being detachably mounted on the lifting columns as a common unit.

13. The conveyor system according to any of the preceding claims,
**characterized in that,** when viewed in the X direction, at least one upper or lower belt body (O₁, O₂, U₁, U₂) extends on both sides of a lifting column (3).

14. The conveyor system according to any of the preceding claims,
**characterized in that** at least one carrier unit (T) for receiving machining tools (C, D) is arranged on the base frame (2), which carrier unit is intended to interact with the item (P) to be conveyed.

15. The conveyor system according to the preceding claim,
**characterized in that** means are provided by means of which the carrier unit (T) can be adjusted for positioning the machining tools in the X, Y and/or Z direction.

## Revendications

1. Système de transport (1) permettant de transporter des marchandises (P) discrètes, comprenant au moins un corps de bande supérieur (O₁, O₂) et un corps de bande inférieur (U₁, U₂) pour pouvoir acheminer les marchandises (P) entre les corps de bande supérieur et inférieur,
a) comportant un cadre de base (2) s'étendant dans une direction de transport (X) et dans une direction de largeur (Y) s'étendant horizontalement et transversalement à celle-ci, le cadre de base (2) soutenant directement ou indirectement l'au moins un corps de bande inférieur (U₁, U₂), lequel étant disposé dans une direction de hauteur (Z) s'étendant perpendiculairement aux directions de transport et de largeur (X, Y),
b) dans lequel respectivement une colonne de levage (3) s'étendant dans la direction Z est disposée sur le cadre de base à au moins trois coins d'un quadrilatère imaginaire, en particulier d'un rectangle, s'étendant dans les directions X-Y, lesquelles colonnes de levage supportent l'au moins un corps de bande supérieur (O₁, O₂) par l'intermédiaire d'écrous de broche (4) montés mobiles en hauteur respectivement sur la colonne de levage (3) et faisant partie d'un mécanisme de levage,
c) au moins une colonne de levage (3) n'étant pas reliée à une autre colonne de levage (3) par un raccord longitudinal fixe s'étendant dans la direction X au-dessus de son écrou de broche (4).

2. Système de transport selon la revendication 1, **caractérisé en ce qu'**au moins une colonne de levage (3) n'est pas reliée à une autre colonne de levage (3) par un raccord transversal fixe s'étendant dans la direction Y au-dessus de son écrou de broche (4).

3. Système de transport selon la revendication 1 ou 2, **caractérisé en ce qu'**au moins deux colonnes de levage (3) font saillie librement vers le haut dans la direction Z au-dessus de leur écrou de broche (4) respectif sans raccords longitudinal et transversal fixes par rapport à d'autres colonnes de levage (3), afin d'assurer l'accès de tous les côtés à des marchandises transportées entre les corps de bande inférieur et supérieur (O₁, O₂, U₁, U₂).

4. Système de transport selon l'une des revendications précédentes,
**caractérisé en ce**
a) **qu'**une distance X (X₃) des colonnes de levage (3) existant au-dessus de l'au moins un corps de bande inférieur (U₁, U₂) est égale à au moins la moitié de la longueur X d'un corps de bande supérieur ou inférieur (O₁, O₂, U₁, U₂) et/ou
b) **que** la distance Y (Y₂) des colonnes de levage (3) existant au-dessus de l'au moins un corps de bande inférieur (U₁, U₂) et en dessous de l'au moins un corps de bande supérieur (O₁, O₂) détermine la largeur Y maximale des marchandises (P) à transporter.

5. Système de transport selon l'une des revendications précédentes, comportant respectivement une colonne de levage (3) selon la revendication 1 aux quatre coins du quadrilatère, **caractérisé en ce que** chaque colonne de levage (3) présente un mécanisme de levage, les quatre mécanismes de levage étant couplés entre eux et pouvant être actionnés manuellement ou de manière automatisée en synchronisation, de préférence par l'intermédiaire d'un élément de transmission de force résistant à la traction tel qu'une chaîne ou une courroie dentée, de telle sorte que toutes les broches sont simultanément mises en rotation, de sorte que tous les écrous de broche se déplacent de la même manière vers le haut ou vers le bas.

6. Système de transport selon l'une des revendications précédentes,
**caractérisé en ce qu'**un guidage linéaire (6) est prévu pour chaque écrou de broche (4), au moyen duquel guidage linéaire l'écrou de broche respectif est protégé contre la rotation dans un plan X-Y et/ou contre le basculement par rapport à un plan X-Y.

7. Système de transport selon l'une des revendications précédentes,
**caractérisé en ce qu'**une poutre transversale (Qo) s'étend depuis un écrou de broche (4) ou un appareil de maintien (7) monté sur celui-ci jusqu'à l'écrou de broche (4) ou jusqu'à un appareil de maintien (7) monté sur celui-ci de la colonne de levage (3) opposée dans la direction Y, sur laquelle poutre transversale (Qo) l'au moins un corps de bande supérieur (O₁, O₂) est monté de manière coulissante dans la direction Y.

8. Système de transport selon la revendication précédente,
**caractérisé en ce que** la poutre transversale (Qo) présente, le long de son extension Y, une série de taquets d'encliquetage (9), un levier d'encliquetage (10) couplé à l'au moins un corps de bande supérieur (O₁, O₂) pouvant être déplacé d'une position de libération, dans laquelle il libère les taquets d'encliquetage, vers une position de travail, dans laquelle il peut être encliqueté directement ou indirectement dans un ou plusieurs des taquets d'encliquetage (9) pour ainsi fixer le corps de bande (O₁, O₂) dans sa position Y le long de la poutre transversale (Qo).

9. Système de transport selon la revendication précédente,
**caractérisé en ce que** le levier d'encliquetage (10) fait saillie, dans la position de libération, avec une section (100) dans la zone entre les au moins un corps de bande supérieur et inférieur (O₁, O₂, U₁, U₂) pour bloquer un acheminement de marchandises lorsque le levier d'encliquetage (10) n'est pas encliqueté.

10. Système de transport selon l'une des revendications 7 à 9,
**caractérisé en ce qu'**un arbre (Wo, Wu) pouvant être entraîné par un moteur (Mo, Mu) s'étend dans la direction Y vers un disque de courroie ou de courroie dentée (S) de l'au moins un corps de bande supérieur ou inférieur (O₁, O₂, U₁, U₂), lequel disque est couplé à l'arbre de manière solidaire en rotation mais de manière coulissante dans la direction Y, de préférence au moyen de deux douilles de roue libre (H) montées en sens inverse.

11. Système de transport selon l'une des revendications 7 à 10,
**caractérisé en ce que** l'au moins un corps de bande supérieur (O₁, O₂) peut être complètement détaché du dispositif (1) en tant qu'unité modulaire avec un moteur (Mo) associé en montant les poutres transversales (Qo) supportant le corps de bande et le moteur (Mo) sur un appareil de maintien (7) pouvant être relié de manière amovible à l'écrou de broche (4) respectif.

12. Système de transport selon l'une des revendications précédentes,
**caractérisé en ce que** l'au moins un corps de bande inférieur (U₁, U₂) peut être complètement détaché du dispositif (1) en tant qu'unité modulaire avec un moteur (Mu) associé en montant les poutres transversales (Qo) supportant le corps de bande et le moteur (Mu) de manière amovible sur les colonnes de levage en tant qu'unité commune.

13. Système de transport selon l'une des revendications précédentes,
**caractérisé en ce qu'**au moins un corps de bande supérieur ou inférieur (O₁, O₂, U₁, U₂) s'étend des deux côtés d'une colonne de levage (3), vu dans la direction X.

14. Système de transport selon l'une des revendications précédentes,
**caractérisé en ce qu'**au moins une unité de support (T) permettant de recevoir des outils d'usinage (C, D) est disposée sur le cadre de base (2), lesquels outils d'usinage doivent coopérer avec la marchandise (P) à transporter.

15. Système de transport selon la revendication précédente,
**caractérisé en ce que** des moyens sont prévus, avec lesquels l'unité de support (T) peut être réglée dans les directions X, Y et/ou Z pour le positionnement des outils d'usinage.
